Europäisches Patentamt

European Patent Office

Office européen des brevets

(11) Publication number : **0 570 222 A1**

# (12) EUROPEAN PATENT APPLICATION

(21) Application number : 93303706.1

(22) Date of filing : 13.05.93

(51) Int. Cl.$^5$: **B65D 81/34,** B65D 65/40, B32B 5/18

(30) Priority : 13.05.92 US 882331

(43) Date of publication of application :
18.11.93 Bulletin 93/46

(84) Designated Contracting States :
AT BE CH DE DK ES FR GB GR IE IT LI LU NL PT SE

(71) Applicant : W.R. Grace & Co.-Conn.
Grace Plaza, 1114 Avenue of the Americas
New York, New York 10036-7794 (US)

(72) Inventor : Gusavage, G.M.
420 Trena Ave.
Lancaster PA 17601 (US)
Inventor : Hessen, T.A.
641 Ridgeview Drive
Ephrata PA 17522 (US)

(74) Representative : Bentham, Stephen
J.A. Kemp & Co. 14 South Square Gray's Inn
London, WC1R 5LX (GB)

(54) Polypropylene foam trays having a barrier layer.

(57)   A microwavable and autoclavable packaging tray (100) has a flexible barrier film (110) having a barrier layer (114) of ethylene vinyl alcohol and a bonding layer (116) is adhered to a foamed polypropylene sheet (120).

FIGURE 1

EP 0 570 222 A1

This invention is directed to the art of foam food trays for the packaging of perishable food. More specifically, this invention is directed to a novel packaging apparatus of polypropylene foam having a laminated barrier film which provides an effective oxygen barrier material to the packaging trade.

Foam food packaging trays are well known. Foam trays having flexible polymeric film sheet adhered thereto are known from U.S. Patent No. 4,847,148 (July 11, 1989) and U.S. Patent No. 4,935,089 (June 19, 1990), both to Schirmer which disclose a thermoformable barrier sheet and a method for making same, respectively. The Schirmer patents disclose a barrier film having low oxygen transmission bonded to foamed or unfoamed polystyrene.

U.S. Patent No. 4,832,775 to Park et al is directed to a polystyrene foam substrate bonded to an oriented polypropylene film with an acrylic adhesive.

U.S. Patent No. 4,344,710 (August 17, 1982) issued to Johnson et al and U.S. Patent No. 4,424,287 (January 3, 1984) issued to Johnson et al disclose a polymer foam extrusion system and process in which blends of alkanes and $CO_2$ gas are used to foam polymers such as polystyrene.

U.S. Patent No. 4,916,198 to Scheve et al discloses a high molecular weight propylene polymer characterized by high melt strength due to strain hardening which is believed to be caused by free-end long chain branches of the molecular chains forming the polymer.

U.S. Patent No. 4,365,044 to Liu discloses a composition comprising crystalline polypropylene, a hydrogenated copolymer of vinyl toluene and alpha-methyl styrene and low density polyethylene.

U.S. Patent No. 5,047,446 to DeNicola, Jr. discloses a method of treating a free radical containing propylene polymer material which results in the production of more long chain branching.

U.S. Patent No. 5,047,485 to DeNicola, Jr. discloses a process for making a propylene polymer having free-end branches of propylene units.

Other publications include European Patent Disclosure No. 0411923A2 to Welsh which teaches using 100% $CO_2$ to foam polystyrene as does Australian Patent Disclosure No. 52724/79 issued to Hall et al.

U.S. Patent No. 3,684,633 issued to Haase on August 15, 1972 and discloses a laminated thermoplastic foam-film dish having a polystyrene foam lamina interposed between two layers of biaxially oriented polystyrene film. Lamination is done by heat sealing the film to the foam. The laminate is then thermoformed.

U.S. Patent No. 3,748,218 issued on July 24, 1973 to Newman et al and discloses a rigid multi-layer formed sheet structure having a layer of saran adhered by tie layers to outer layers of impact polystyrene or polyvinyl chloride.

U.S. Patent No. 3,793,135 issued on February 19, 1974 to Monia and discloses a formable barrier packaging material having a methyl methacrylate styrene polymer coated by means of an adhesive to vinyl chloride vinylidene chloride polymer. The packaging material can be readily drawn in a mold to form a package.

U.S. Patent No. 3,823,211 issued on July 9, 1974 to Colombo and discloses a laminate having a foamed polystyrene layer sandwiched between acrylonitrile- butadiene-styrene copolymer or impact styrene polymer layers. In producing the laminates, an inner foam bubble heat seals to an outer film bubble.

U.S. Patent No. 4,004,075 issued on January 18, 1977 to Richmond et al and discloses a packaging film in which an acrylonitrile-styrene-isobutylene interpolymer is optionally foamed, and the film can be in the form of an actual container of various shapes. Vacuum molding is a suitable process in connection with the use of this film. The interpolymer layer can act as a vapor barrier layer in combination with one or more layers of polystyrene.

U.S. Patent No. 4,055,672 issued on October 25, 1977 to Hirsch et al and discloses a tray having impact polystyrene with a coat of saran, and a lid comprising polyester, cellophane, or nylon with a saran coating.

U.S. Patent No. 4,056,587 issued on November 1, 1977 to Honkanen et al and discloses a polystyrene foam sheet further expanded by impregnating with water and heating.

U.S. Patent No. 4,076,570 issued on February 28, 1978 to Medley et al and discloses a multiple layer laminate having layers of vinylidene chloride polymer, acrylonitrile-butadiene-styrene , impact polystyrene, and optionally fourth and fifth layers identical to the second and first layers respectively . This laminate is useful in thermoforming applications.

U.S. Patent No. 4,111,349 issued on September 5, 1978 to Buckler et al and discloses containers formed from laminates containing filled polystyrene which may be solid or foamed, with an additional outer layer of polypropylene or acrylonitrile as barrier material, and another outer layer of crystal polystyrene. The laminates may be produced by coextrusion techniques using adhesive layers of ethylene vinyl acetate copolymer, or by heat pressing.

U.S. Patent No. 4,221,836 issued on September 9, 1980 to Rutledge et al and discloses coextruded plastic sheeting having a layer of impact polystyrene bonded by means of an intermediate layer to an outer layer of acrylonitrile-butadiene-styrene polymer. The sheeting is useful in thermoforming applications.

U.S. Patent No. 4,243,725 issued on January 6, 1981 to Wiggins et al and discloses nitrile barrier resin and high impact polystyrene adhered together by means of a blended tie layer.

U.S. Patent No. 4,332,858 issued on June 1, 1982 to Saitoh et al and discloses a multi-layer laminate having a modified styrene butadiene block copolymer adhered to a vinylidene chloride polymer.

U.S. Patent No. 4,402,889 issued on September 6, 1983 to Bonis discloses a coextruded multi-layer plastic sheet having one or more layers of high impact polystyrene.

U.S. Patent No. 4,440,824 issued on April 3, 1984 to Bonis discloses a thermoformable coextruded multi-layer structure having an interior layer of polyolefin adhered by intermediate adhesive layers to outer layers of high impact polystyrene.

U.S. Patent No. 4,558,099 issued on May 13, 1986 to Diez discloses a film seal for a container having a polymeric foam or pulpboard backing, an optional vapor barrier such as polyvinylidene chloride, and a biaxial polystyrene.

U.S. Patent No. 4,659,785 issued on April 21, 1987 to Nagano et al discloses a hot melt adhesive composition which may Be used in connection with a polyolefin or a polyvinylidene chloride as one outer layer, and a foam polystyrene as another outer layer to form a laminated article.

It is also noted that various devices are known to enhance the microwavability of such trays for use in microwave heating of foods in microwave ovens, such as adding particulate polyphenylene oxide to foaming polystyrene or perforating polystyrene sheet.

There is growing pressure exerted in the food packaging industry to provide packaging which provides a longer shelf life than that currently available. In addition, the food industry is searching for alternatives to polystyrene foam, a product whose manufacture involves the use of large amounts of hydrocarbon blowing agents including chlorohydrocarbons and flurohydrocarbons. In addition, polystyrene recycling efforts have to date been difficult because of the presence of vinylidene chloride copolymers (Saran) in barrier film which may be laminated to the polystyrene. Generally, as polystyrene packaging has a fairly low melting point, such packaging is not well suited for use in a microwave oven.

Thus, there is a need for a packaging tray of light-weight foam which can be manufactured without the use of hydrocarbons, provided with barrier properties, is easily recycled, and can be used in a microwave oven. Therefore, there is room for variation and improvement in the art.

It is thus an object of the present invention to provide a polypropylene foam tray with barrier properties.

It is a further object of the invention to provide a polypropylene foam packaging tray with barrier properties which is easily recyclable.

It is a still further and yet more particular object of this invention to provide such a polypropylene foam packaging tray produced, either without the use of hydrocarbon blowing agents or with reduced hydrocarbons.

It is a still further object of this invention to provide a polypropylene foam packaging tray with barrier properties which is capable of being used in a microwave oven.

It is a still further and more particular object of this invention to provide a polypropylene foam packaging tray with a barrier film which incorporates reclaimed foam scrap.

These as well as other objects of the invention are provided by a polypropylene molded foam tray having a bottom surface and an upper surface, the upper surface carrying a laminated flexible film layer which provides an oxygen barrier. The present invention is accomplished by a method for manufacturing a recyclable thermoformable foam sheet comprising (a) supplying a polypropylene foam sheet prepared by a method such as that disclosed in copending U.S. Serial No. 882332; (b) laminating onto one surface of the foam sheet a flexible film, the flexible film having a barrier layer which is free of vinylidene chloride and a bonding layer, whereby the bonding layer is adhered to one surface of the foam polypropylene sheet thereby making a laminate; and (c) subsequently thermoforming the resulting laminate into packaging trays.

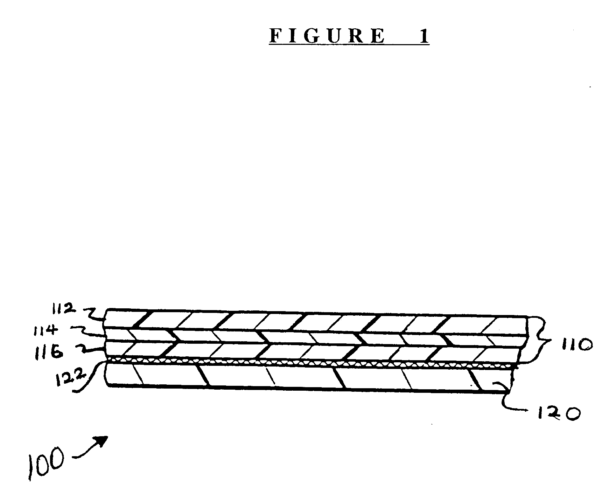

Figure 1 is a cross-sectional view of a barrier foam sheet in accordance with the present invention.

In accordance with this invention it has been found that a microwavable tray having barrier properties can be provided by the lamination and subsequent thermoforming of a polypropylene foam sheet. The making of a polypropylene foam sheet by the preferred use of a $CO_2$ blowing agent is disclosed in the above referenced related application simultaneously filed herewith.

Polypropylene foam, made with essentially 100% $CO_2$ as a blowing agent, is desirable in that such foam is immediately amenable to lamination and thermoforming without curing delays associated with hydrocarbon blown foam. A further advantage of employing 100% $CO_2$ as a blowing agent for the polypropylene foam sheet of the present invention, is that a blistering or delamination of the barrier film from the foam is avoided. That is, when 100% of a hydrocarbon such as pentane or butane is used in the production of foamed polymeric sheet, a curing period is required because the hydrocarbon initially remains in the foam sheet but leaches out over time. Although much of the hydrocarbon has dissipated from the foam sheet after curing, some volatile hydrocarbon remains which continues to dissipate from the sheet over time. When a barrier film is laminated to the surface of the sheet, the hydrocarbon which is coming out of the sheet accumulates at the film-foam interface and eventually causes adhesive failure. This phenomena applies to barrier sheets such as disclosed in above-mentioned U.S. Patent Nos. 4,847,148 and 4,935,089 as well as copending U.S. Serial No. 590,892. Thus, for purposes of the present invention 100% $CO_2$ or $CO_2$/hydrocarbon blends which reduce the hydrocarbon content of the final laminate are preferred, although pure hydrocarbon can be used.

As seen in reference to Figure 1 of the drawings, a thermoformable barrier sheet 100 has a film 110 and a polypropylene foamed sheet 120 which are bonded together at bondins interface 122. Bonding interface 122 represents a bond produced by corona bonding or by heat and pressure between layer 116 and 120.

Layer 116 of film 110 will interface with polypropylene sheet 120 and therefore must have a surface that will adhere to polypropylene when exposed to corona discharge or heat and pressure. Preferred resins for layer 116 include ethylene copolymers such as ethylene unsaturated ester copolymer such as ethylene methacrylate (EMA), ethylene n-butyl acrylate (EBA) and ethylene vinyl acetate (EVA). Layer 114 of film 110 provide the overall barrier sheet with gas barrier characteristics and, particularly, barrier to oxygen transmission. The preferred oxygen barrier resin for layer 114 is an ethylene vinyl alcohol copolymer.

Additionally, barrier layer 114 may have on either or both surfaces thereof a polymeric adhesive to improve adherence of the barrier material to bonding layer 116 and/or to surface layer 112. Surface layer 112 serves two functions. First, it acts as an abuse layer, protecting the film as well as the underlying foam sheet during lamination, shipping and handling. For example, a most preferred method for laminating the film to the foam sheet is heat and pressure applied by hot rolls. Each of a pair of such rolls are generally set to the same temperature. For the present polypropylene foam sheet, that temperature must be sufficiently high to get steady tracking of the polypropylene foam. Therefore, layer 112 is preferably composed of a heat resistant polymeric material such as polypropylene homopolymer or copolymer. However, a second function of surface layer 112 in many end use applications is as a seal layer for sealing a top web to a final thermoformed product such as a tray. A preferred resin which displays adequate heat resistance as well as sealability is ethylene propylene copolymer or polypropylene, especially for autoclave applications. For such applications, it is preferable that the film is irradiation cross-linked for improved high temperature strength.

Additionally, the barrier film of the present invention may include additional or fewer layers than those discussed herein. For example, additional layers may be provided in between the adhesive layers and each of the bonding and surface layers, respectively. In a preferred embodiment, layers of ethylene vinyl acetate having relatively high percentages of vinyl acetate are disposed on the outer surfaces of adhesive layers which may sandwich the barrier and interior to the bonding and surface layers. Similarly, for a barrier composition which will readily adhere to bonding and surface layers, adhesive layers are not required. More specifically, for a barrier layer which can achieve the functions of the bonding layer or the surface layer or both, than such layer or layers may be excluded. The only limitations on the barrier film of the present invention are (1) it must provide low oxygen transmissibility without vinylidene chloride, (2) it must be capable of bonding to foamed polypropylene and (3) it must provide adequate surface characteristics such as abuse resistance and/or sealability, for the desired end use. Thus, unless a single resin can serve each of these functions, films having a minimum of three layers will be required; that is bonding layer/barrier layer/surface layer. One example of such a film would be an EVA/EVOH/EPC structure.

Optionally, a second film may be laminated to the opposite surface of the barrier foam sheet for added strength, in order to provide cracking resistance to the end product when it is under stress.

The invention may be further understood by reference to the example below. Immediately below is a Table 1 itemizing resins employed in the actual structure produced in accordance with this invention.

**TABLE 1**

| | | |
|---|---|---|
| EMA | = SP 2260 | (CHEVRON) |
| EVA | = REXENE PE 1375 | ( ) |
| LLDPE | = DOWLEX 2044A | (DOW) |
| $X_1$ | = QUANTUM PLEXAR 107 | ( ) |
| $X_2$ | = SORANAL ET | (NIPPON) |
| PEPP | = AMPACET 10853 | ( ) |

Table 2 lists an example prepared from the resins itemized in Table 1. The film component of a thermoformable sheet was coextruded by hot blowing the component resins from a coextrusion die. Total film thickness was 2 mils having individual layer thicknesses as indicated in Table 2.

## TABLE 2

**EX   CONSTRUCTION**

1   Polypropylene/ EMA  / EVA  / $X_1$  / $X_2$  / $X_1$  / EVA  / 95% LLDPE / 5% PEPP
                   .4ml    .24ml   .2ml  .3ml   .2ml  .25ml               .4ml

Example 1 above was laminated to roll of polypropylene foam by a thermobonding method. The polypropylene foam roll having an average thickness of 20.57 millimeters was fed into a lamination unit. Best adhesion occurs when the upper laminator rolls, being in intimate contact with the barrier film, are maintained at a temperature of 250°. The bottom laminator roll was maintained at 350° with no tunnel heat being provided to the laminator unit. Roller speed was constant at 12 feet per minute.

It was found that under the above described conditions, the level of adhesion generally improved as the pressure supplied by the laminator rolls was increased. However, excess pressure, i.e. crushing of the foam sheet, is not desirable as this tends to cause tracking problems associated with slight thickness variations within the polypropylene foam sheet.

Following lamination, foam sheets can be vacuum thermoformed using well known techniques and procedures. Given the higher melting point of polypropylene over other thermoplastic foam, vacuum forming is found to work best at relatively high oven temperatures. Forming temperatures between 425°F and 590°F with forming times ranging from 12 to 40 seconds yielded thermoformed polypropylene trays having barrier properties.

The barrier polypropylene foam trays taught in accordance with this invention are well suited for food packaging trays. Trays possessed desired qualities of strength, insulation ability, are light weight, possess barrier properties and have superior microwave ability compared to other nonpolypropylene foam barrier trays. Further, such barrier trays can be recycled and used as reclaim in the foam extruding process. Polypropylene foam barrier trays are therefore ideal for microwavable food packaging where a microwavable container is supplied.

Traditional microwave containers with prepackaged food often use rigid plastic trays or plates to provide a microwavable surface for heating the food. While such structures are adequate, rigid plastic containers increase shipping weight and have poor insulation abilities. As a result, the rigid plastic trays often become too hot during microwaving for consumers to handle safely.

Polypropylene foam trays, however, conduct much less heat and permit safe handling of the tray and heated food for greater consumer convenience and safety.

While certain representative embodiments and details have been shown for the purpose of illustration, numerous modification to the formulations described above can be made without departing from the invention disclosed and as defined by the following appended claims.

## Claims

1.   A thermoformed laminated packaging tray comprising:
(a) a flexible barrier film having (i) a barrier layer free of vinylidene chloride and (ii) a bonding layer capable of adhesion to a foamed polypropylene sheet when the bonding layer is exposed to heat and pressure; and
(b) a layer of foamed polypropylene sheet having two opposing surfaces, wherein the bonding layer is adhered to one surface of the foamed polypropylene sheet.

2.   A method for making a thermoformed laminated polypropylene packaging tray according to claim 1 comprising:
providing a polypropylene polymer;
heating the polypropylene to a melt temperature;
injecting the blend with carbon dioxide gas;
extruding the carbon dioxide containing blend into a sheet;
laminating onto one surface of the sheet a flexible barrier film having an oxygen barrier layer and a bonding layer, the bonding layer adhering to one surface of the foamed polymer sheet thereby making a laminate;

    thermoforming the resulting laminate into a desired molded shape.

3. A method of making a thermoformed barrier tray according to claim 1 comprising:

    providing a film comprising:

    a surface layer comprising polyethylene;

    an internal layer comprising a polymer of ethylene vinyl alcohol having low oxygen transmission characteristics; and

    a bonding layer comprising ethylene methacrylate copolymer capable of adhesion to a thermoformable plastic when exposed to heat and pressure;

    providing a thermoformable polypropylene sheet;

    bringing the film and sheet together;

    exposing the film and sheet to heat and pressure, thereby making a laminate; and

    thermoforming the laminate into a tray.

4. A method according to claim 3 wherein the film and sheet are passed through rolls set at between 121°C (250°F) and 177°C (350°F).

5. A method according to claim 3 wherein the ethylene copolymer is ethylene methacrylate.

6. A packaging tray according to claim 1 further including a second film adhered to an opposite surface of the foamed polypropylene sheet.

7. A method according to claim 2 further including laminating a second film onto an opposite surface of the sheet.

8. A thermoformable laminate comprising:

    (a) a flexible barrier film having (i) a barrier layer free of vinylidene chloride and (ii) a bonding layer capable of adhesion to a foamed polypropylene sheet when the bonding layer is exposed to heat and pressure; and

    (b) a layer of foamed polypropylene sheet having two opposing surfaces, wherein the bonding layer is adhered to one surface of the foamed polypropylene sheet.

9. A thermoformable laminate according to claim 8 further including a second film adhered to an opposite surface of the foamed polypropylene sheet.

10. A method for making a thermoformable laminate according to claim 8 or 9 which comprises

    providing a polypropylene polymer;

    heating the polypropylene to a melt temperature; injecting the blend with carbon dioxide gas;

    extruding the carbon dioxide containing blend into a sheet;

    laminating onto one surface of the sheet a flexible barrier film having an oxygen barrier layer and a bonding layer, the bonding layer adhering to one surface of the foamed polymer sheet thereby making a laminate.

## FIGURE 1

112
114
116
122
110
120
100

**European Patent Office**

## EUROPEAN SEARCH REPORT

Application Number

EP 93 30 3706

### DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | WO-A-9 004 517 (NIELSEN EMBALLAGE AS) | 1,8,9 | B65D81/34 |
| Y | * the whole document * | 2-7 | B65D65/40 |
| | --- | | B32B5/18 |
| Y | Section Ch, Week 8951, Derwent Publications Ltd., London, GB; Class A04, AN 89-373516 & JP-A-1 278 539 (SEKISUI PLASTICS KK) 8 November 1989 * abstract * | 2-7 | |
| | --- | | |
| Y | US-A-4 008 347 (S. AMBERG) * column 7, line 30 - column 8, line 14; figures 2,3 * * column 9, line 24 - line 55 * | 4 | |
| | --- | | |
| Y | EP-A-0 399 439 (SHOWA DENKO KK) * claim 1; example 4 * | 5 | |
| | --- | | |
| A | DE-A-2 062 417 (P. KIEFEL GMBH) * the whole document * | 1-9 | |
| | ----- | | TECHNICAL FIELDS SEARCHED (Int. Cl.5 ) |
| | | | B65D B32B |

The present search report has been drawn up for all claims

| Place of search | Date of completion of the search | Examiner |
|---|---|---|
| THE HAGUE | 06 SEPTEMBER 1993 | PERNICE C. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document